# EUROPÄISCHE PATENTSCHRIFT

(11) **EP 0 715 713 B1**
(45) Veröffentlichungstag und Bekanntmachung des Hinweises auf die Patenterteilung: **14.05.1997**
(21) Anmeldenummer: 94926841.1
(22) Anmeldetag: 16.08.1994
(51) Int. Cl.: G01N 21/91

(54) **VERFAHREN ZUR DIFFERENZIERUNG VON ORGANISCHEN LEBENSMITTELRÜCKSTÄNDEN AUF HARTEN OBERFLÄCHEN**
PROCESS FOR DIFFERENTIATING ORGANIC FOODSTUFF RESIDUES ON HARD SURFACES
PROCEDE DE DIFFERENTIATION DE RESIDUS DE MATIERES ALIMENTAIRES ORGANIQUES SUR DES SURFACES DURES

(30) Priorität: 23.08.1993 DE 4328253
(43) Veröffentlichungstag der Anmeldung: 12.06.1996
(73) Patentinhaber: HENKEL-ECOLAB GmbH & CO. OHG, 40589 Düsseldorf (DE)
(72) Erfinder: OUZOUNIS, Dimitrios, D-47807 Krefeld (DE); GÖRMS, Christine, D-40789 Monheim (DE)
(86) Internationale Anmeldenummer: EP9402725
(87) Internationale Veröffentlichungsnummer: WO9506241

(56) Entgegenhaltungen:
- WO-A-84/01713
- WO-A-90/14591
- US-A- 4 386 961
- PATENT ABSTRACTS OF JAPAN vol. 10, no. 371 (P-526) (2428) 11. Dezember 1986 & JP,A,61 164 158 (ARUBOOSU YAKUSHIYOU) 24. Juli 1986

## Beschreibung

Die vorliegende Erfindung betrifft ein Verfahren zur Differenzierung von organischen Lebensmittelrückständen nach ihrer Art auf harten Oberflächen, durch geeignete Farbstoffkombinationen. Die Erfindung betrifft ferner flüssige Formulierungen von Farbstoffgemischen sowie deren Verwendung im erfindungsgemäßen Verfahren.

Jede Herstellung oder Verarbeitung von Lebensmitteln oder anderen Materialien, die organische Komponenten tierischer oder pflanzlicher Herkunft enthalten, führt zu Verschmutzungen der Gerätschaften, Arbeitsflächen und Räumlichkeiten. Derartige Verschmutzungen können zur Bildung und zum Wachstum von Bakterien, Pilzen und Mikroorganismen führen. Da dies die Qualität der verarbeiteten Produkte in erheblichen Maße beeinflussen kann und daher vermieden werden muß, ist ein hoher Hygienestandard erforderlich.

Zur Erzielung eines hohen Hygienestandards in einem Lebensmittel produzierenden Betrieb ist eine regelmäße Reinigung und Desinfektion unerläßlich. Bei einem Lebensmittelbetrieb trifft man in der Regel neben anorganischen Salzen auf organische Verschmutzungen, wie Proteine, Fette, nieder- und hochmolekulare Kohlenhydrate, die meistens nebeneinander vorliegen.

Für die Entfernung dieser Verschmutzungen werden Reinigungsmittel unterschiedlicher Zusammensetzung eingesetzt. Die Auswahl des geeigneten Reinigungsmittels richtet sich in der Regel nach der Art der zu entfernenden Verschmutzung. Kennt man die Art der Verschmutzung, so kann das Reinigungsmittel entsprechend dieser ausgewählt werden. Die unterschiedlichen Kombinationen von Reinigungsmittelkomponenten bewirken jedoch einen Unterschied in der Reinigungsleistung gegenüber Eiweiß, Fett und Kohlenhydraten. Nach einem Reinigungsgang können unter Umständen geringe Schmutzreste zurückbleiben, die zwar visuell kaum wahrnehmbar sind, jedoch ein mikrobiologisches Risiko darstellen.

Bis jetzt wurde der Hygienestandard ausschließlich durch bakteriologische Methoden durch Anlegen einer Kultur überprüft. Derartige Methoden zur Überprüfung des Hygienestandards sind jedoch ungeeignet, da sie nur dazu verwendet werden können, lebende Mikroorganismen (Bakterien und Pilze) zu bestimmen. Mit bakteriologischen Methoden ist es nicht möglich, die organischen Verunreinigungen festzustellen, die Anlaß für das Bakterienwachstum gegeben haben. Daher ist mit bakteriologischen Methoden ein unmittelbares Bestimmen des Reinigungserfolges nicht möglich. Darüberhinaus sind bakteriologische Methoden zeitaufwendig und können einige Stunden, wenn nicht sogar Tage in Anspruch nehmen, bis ein endgültiges Ergebnis vorliegt.

Die Kontrolle der Hygiene durch bakteriologische Verfahren kann darüber hinaus durch Desinfektion verfälscht werden, die nicht ausschließt, daß sich organische Verunreinigungen ansammeln, die schließlich dann doch Ursache für das Wachstum von resistenten Mikroorganismen sind. Ferner ist durch die punktuelle Entnahme der Proben nicht gewährleistet, daß auch ganze Geräte und größere Oberflächen auf ihren Hygienestandard hin überprüft werden können.

Die PCT-Veröffentlichung WO 90/14591 beschreibt ein Verfahren zur Reinigung und gleichzeitigen Kontrolle des Reinigungserfolgs und der Hygiene durch Aufbringen einer Lösung eines Gemisches eines Reinigungsmittels und eines Farbstoffs oder einer Farbstoffkombination auf zu reinigende Oberflächen. Die organische Verunreinigung, die auf der Oberfläche nach der Reinigung zurückbleibt, wird dabei durch Einfärbung sichtbar. Nach dieser Methode ist es jedoch lediglich möglich festzustellen, ob noch Rückstände nach der Reinigung auf der Oberfläche verblieben sind. Hinsichtlich der Art der Rückstände, also ob es sich um Fette, Kohlenhydrate oder Eiweiße handelt, kann anhand dieser Methode keine Aussage gemacht werden.

Die EP-A-O 347 494 beschreibt ein Verfahren zur Feststellung von Verunreinigungen auf einem Gegenstand durch Behandlung desselben mit einer Farbstofflösung und anschließend mit einer Entwicklerlösung. Auch dadurch ist es lediglich möglich, die Verunreinigungen zu lokalisieren, nicht aber ihrer Art nach zu unterscheiden.

Ein Verfahren zur Bestimmung von Austritt von organischem Material aus Behältern oder Leitungen durch eine geeignete Farbstofflösung ist in US-A-4 745 797 beschrieben.

Die Einfärbung von Lebensmittelresten durch Indikatoren (Erythrosin) ist aus der Odontologie bekannt. Hier werden die Indikatoren zur Sichtbarmachung von Zahnbelägen eingesetzt. Auch hier ist lediglich die Aussage möglich, daß sich Lebensmittelrückstände auf den Zähnen befinden. Eine Aussage über die Art der Rückstände ist nicht möglich.

Es besteht jedoch ein großer Bedarf an einem Verfahren, welches es ermöglicht, nach einem Reinigungsgang zu bestimmen, welcher Art die organischen Rückstände auf der Oberfläche sind, um für eine gegebenenfalls notwendige Nachreinigung gezielt Spezialreiniger einsetzen zu können oder um für die Zukunft geeignete Reiniger oder Reinigerkombinationen einsetzen zu können und so Nachreinigungen zu vermeiden.

Gleichermaßen sollte bereits vor der eigentlichen Reinigung die Art der organischen Rückstände auf der Oberfläche festgestellt werden können, um so unmittelbar eine geeignete Reinigerzusammensetzung einsetzen zu können.

Dieser Bedarf an einer schnellen Methode zur Ermittlung der organischen Schmutzreste vor oder nach einem Reinigungsgang besteht nicht nur für die gesamte Lebensmittel produzierende Industrie, sondern für alle Bereiche, bei denen eine Reinigung aus hygienischen und/oder aus ästhetischen Gründen notwendig ist, wie insbesondere die Fleisch-, Fisch-, Feinkost-, Getränkebetriebe, Brauereien, milchverarbeitende- und landwirtschaftliche Betriebe, Stärke- und Zuckerindustrie, Küchen, Krankenhäuser, Schwimmbäder, Kosmetikindustrie und pharmazeutische Industrie.

Es war daher eine Aufgabe der vorliegenden Erfindung, ein Verfahren zur Verfügung zu stellen, welches es erlaubt, organische Verunreinigungen vor oder nach einem Reinigungsgang nach ihrer Art, d.h. nach Fett, Eiweiß und Kohlenhydrat (nieder- und hochmolekular) zu differenzieren. Das Verfahren sollte dabei einfach durchführbar sein und es unmittelbar erlauben, die Differenzierung der Verunreinigung nach Fett, Eiweiß oder Kohlenhydrat auf der harten Oberfläche vornehmen zu können.

Diese Aufgabe wird erfindungsgemäß gelöst, durch ein Verfahren zur Differenzierung von organischen Lebensmittelrückständen nach ihrer Art auf harten Oberflächen durch Aufbringen einer Lösung enthaltend eine Kombination von wenigstens zwei Farbstoffen, von denen wenigstens einer einen hydrophilen Charakter und wenigstens einer einen hydrophoben Charakter aufweist, auf die harte Oberfläche und anschließende optische Bestimmung der Art der Rückstände durch ihre spezifische Einfärbung.

Wenn im Zusammenhang mit der vorliegenden Erfindung von Farbstoffen mit hydrophilem beziehungsweise hydrophobem Charakter die Rede ist, so sei zur Definition der Begriffe "hydrophil" und "hydrophob" beispielsweise auf die Ausführungen zu diesen Stichworten in "Römpp Chemie Lexikon", 9. Auflage, Band 3 (1990), Georg Thieme Verlag, Seiten 1892 und 1893 verwiesen. Hier heißt es: "Der hydrophile Charakter einer Substanz wird durch ihre Tendenz bestimmt, in Wasser einzudringen und darin zu verbleiben." sowie "Der hydrophobe Charakter einer Substanz wird durch ihre Tendenz bestimmt, nicht in Wasser einzudringen und darin zu verbleiben." Dementsprechend werden im Sinne der vorliegenden Erfindung unter "Farbstoffen mit hydrophilem Charakter" solche verstanden, die "wasserfreundlich" sind und sich leicht und gut in Wasser (bei Raumtemperatur) lösen. Andererseits werden erfindungsgemäß unter "Farbstoffen mit hydrophobem Charakter" solche verstanden, die "wasserabweisend" sind, d. h. in Wasser unlöslich oder schwer bzw. wenig löslich (bei Raumtemperatur) sind. Entsprechende Charakterisierungen der im Sinne der Erfindung in Frage kommenden Farbstoffe finden sich beispielsweise in den nachstehend genannten Standardwerken:
- "Kosmetische Färbemittel", 3. Auflage, 1991, Herausgeber: Farbstoffkommission der Deutschen Forschungsgemeinschaft (DFG), VCH Verlagsgesellschaft mbH, sowie
- "Colour Index", Third Edition, Vol. 1 bis 9, published by The Society of Dyers and Colourists.

Bei den organischen Rückständen handelt es sich um Fette, Eiweiße, und/oder Kohlenhydrate, die nebeneinander oder auch einzeln vorliegen können. Die Bestimmung der Art des Rückstandes ist gemäß dem erfindungsgemäßen Verfahren mit einer Lösung möglich.

Mit dieser Methode kann der Anwender
1. vor der eigentlichen Reinigung die Art der organischen Verschmutzung sowie die Stellen, die am stärksten verunreinigt sind erkennen, so daß die Art des Reinigers ausgewählt werden kann und die stärker verschmutzten Stellen intensiver behandelt werden können,
2. den Reinigungserfolg nach erfolgter Reinigung kontrollieren,
3. die Schwächen seines Reinigers gegenüber den einzelnen Schmutzkomponenten leicht erkennen, so daß er für die Zukunft die richtige Auswahl der Reiniger treffen kann und
4. nach Feststellung der nach einem Reinigungsgang zurückgebliebenen organischen Verunreinigungen, diese mit Spezialreinigern entfernen.

Das erfindungsgemäße Verfahren stellt insbesondere bei der Entwicklung eines Reinigungsmittels eine einfache Methode zur qualitativen Aussage der Reinigungsleistung von Reinigerformulierungen dar, indem bei der Untersuchung derselben eine Versuchsanschmutzung (Fett/Eiweiß/Stärke) zunächst mit dem zu untersuchenden Reinigungsmittel und dann mit der erfindungsgemäßen Formulierung nach einem standardisierten Verfahren behandelt. Durch die unterschiedliche Verfärbung der einzelnen Schmutzkomponenten kann erkannt werden, welche Komponente sich durch die Reinigerformulierung schwächer oder stärker ablösen läßt. Danach können gezieltere Rezepturverbesserungen vorgenommen werden.

Das erfindungsgemäße Verfahren ermöglicht es, durch Detektion der Art der Verschmutzung vor der Reinigung eine geeignete Reinigungsmittelwahl zu treffen. Nach der Reinigung kann einerseits der Reinigungserfolg kontrolliert werden und andererseits ein für die nicht entfernte Schmutzkomponente geeigneter Spezialreiniger ausgewählt werden. Bei der Reinigung großer Produktionsanlagen bzw. Betriebe können beispielsweise kritische Stellen nach dem HACCP-Prinzip (Hazard Analysis of Critical Control Points) definiert werden. Hierzu werden nach der Reinigung die kritischen Stellen mit der erfindungsgemäßen Formulierung besprüht und je nach dem Ergebnis geeignete Maßnahmen getroffen.

Das Auftragen der erfindungsgemäßen Formulierung auf die zu untersuchenden harten Oberflächen kann nach bekannten Verfahren erfolgen, insbesondere jedoch durch Aufsprühen, Aufpinseln, Aufgießen oder Auftupfen der erfindungsgemäßen Formulierung auf die Oberfläche. Dies kann gegebenenfalls bereits mit dem Vorspülwasser erfolgen.

Nachstehend findet sich eine beispielhafte Auflistung von im Sinne der vorliegenden Erfindung verwendbaren Farbstoffen mit hydrophilem bzw. mit hydrophobem Charakter. Bezüglich der Angaben zu "Colour Index Nummer C.I.", "DFG-Name", "Synonyma" und "EG-Nummer" sei auf die beiden vorstehend zitierten Standardwerke verwiesen:

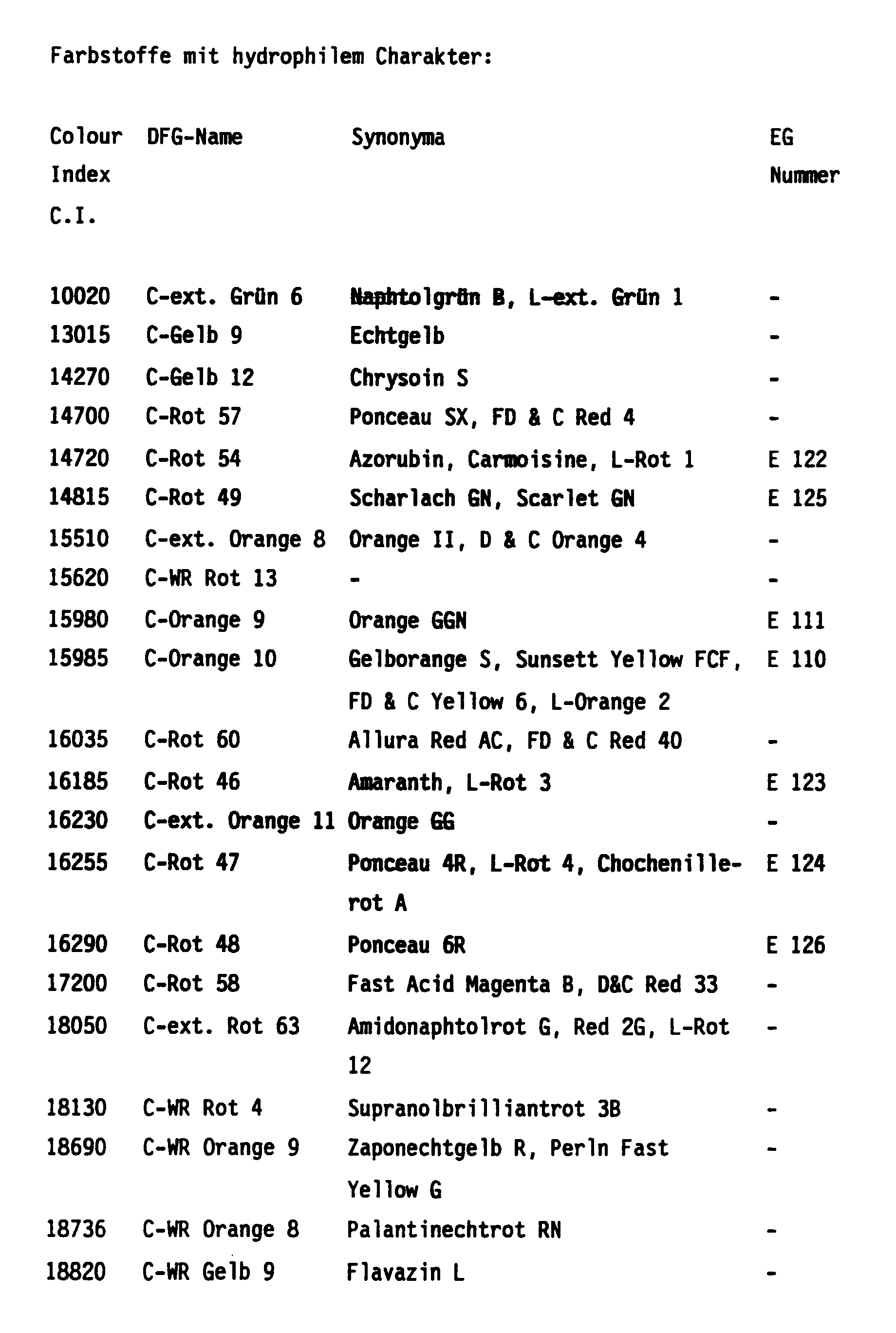

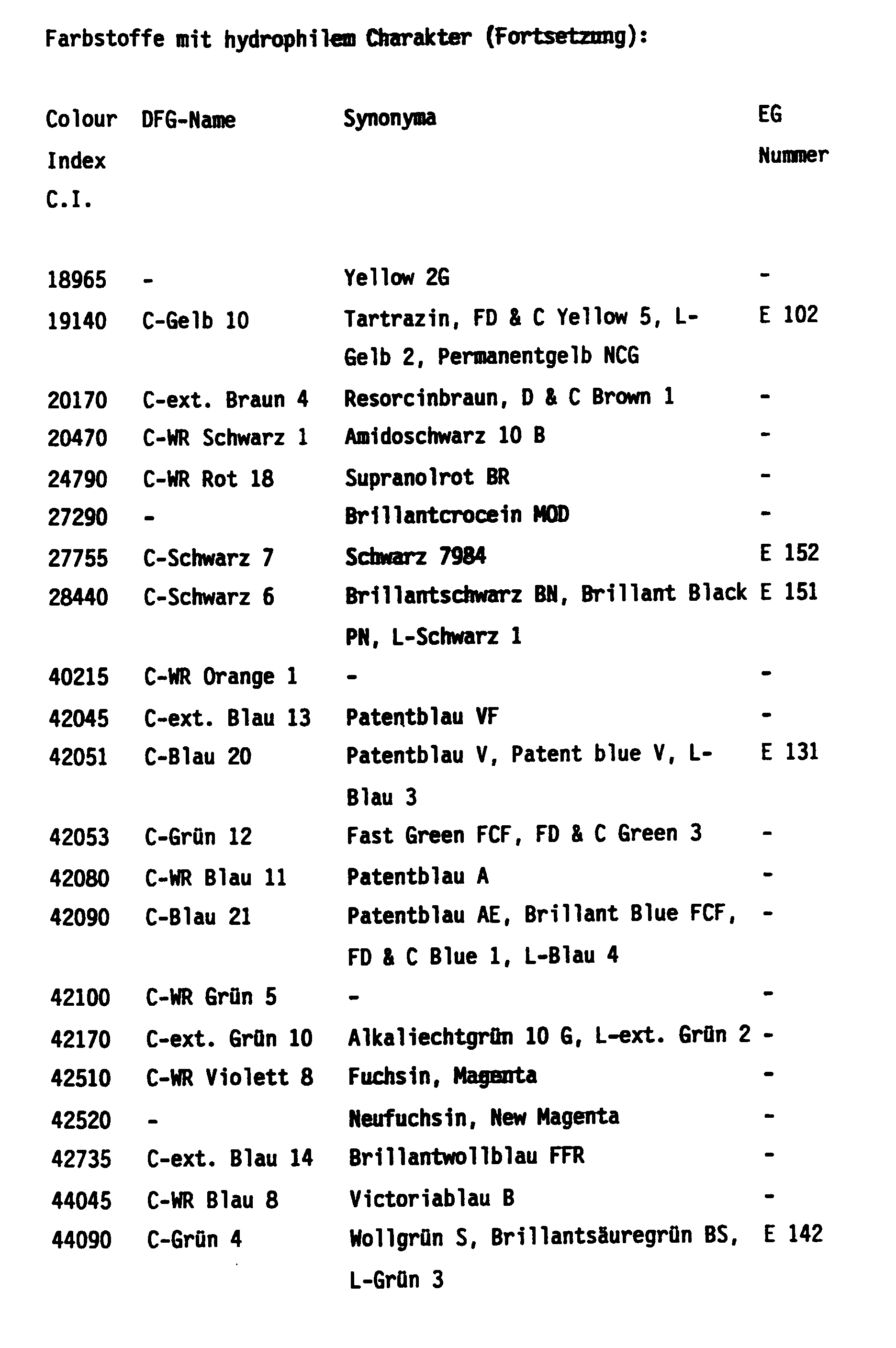

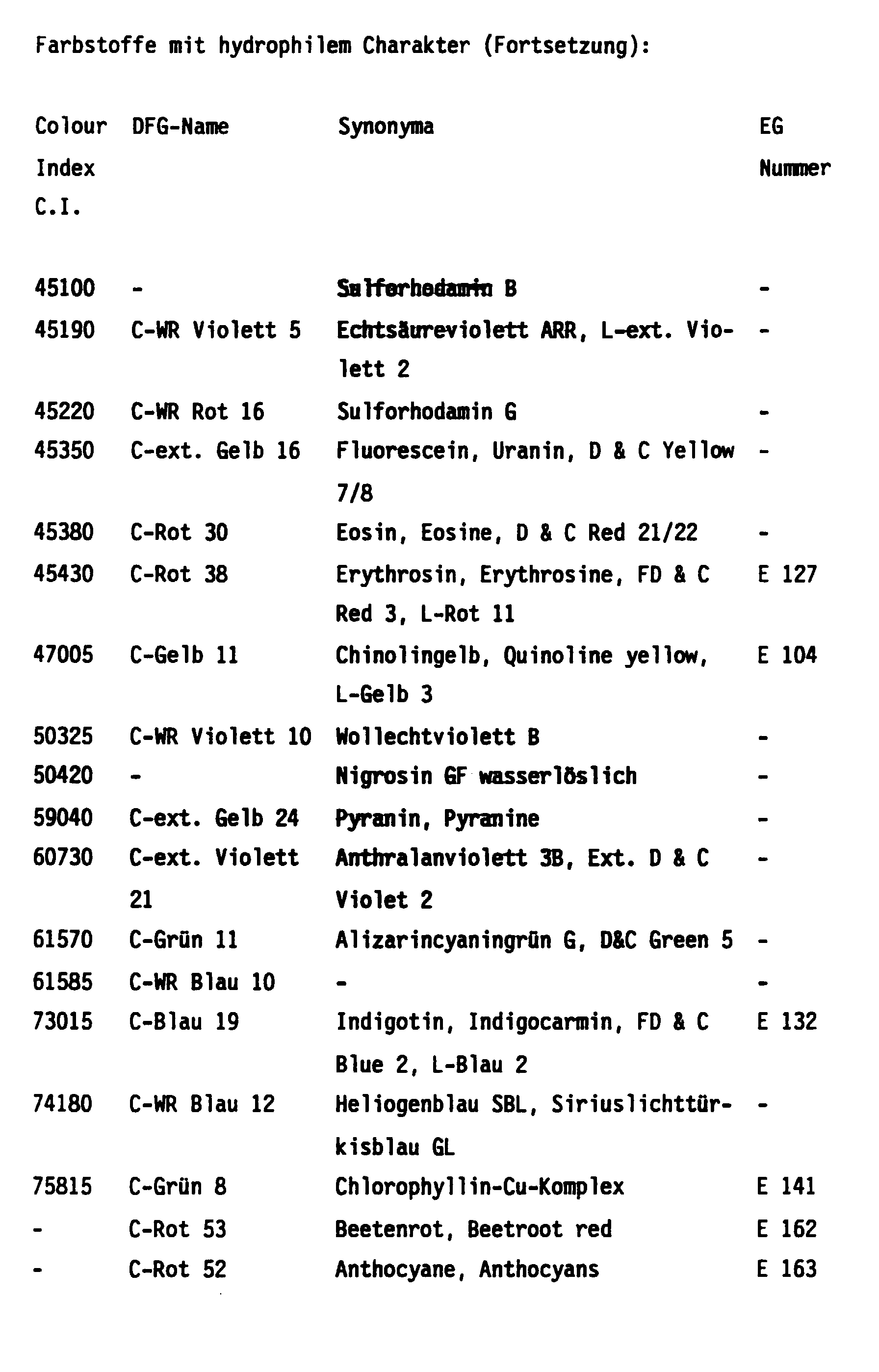

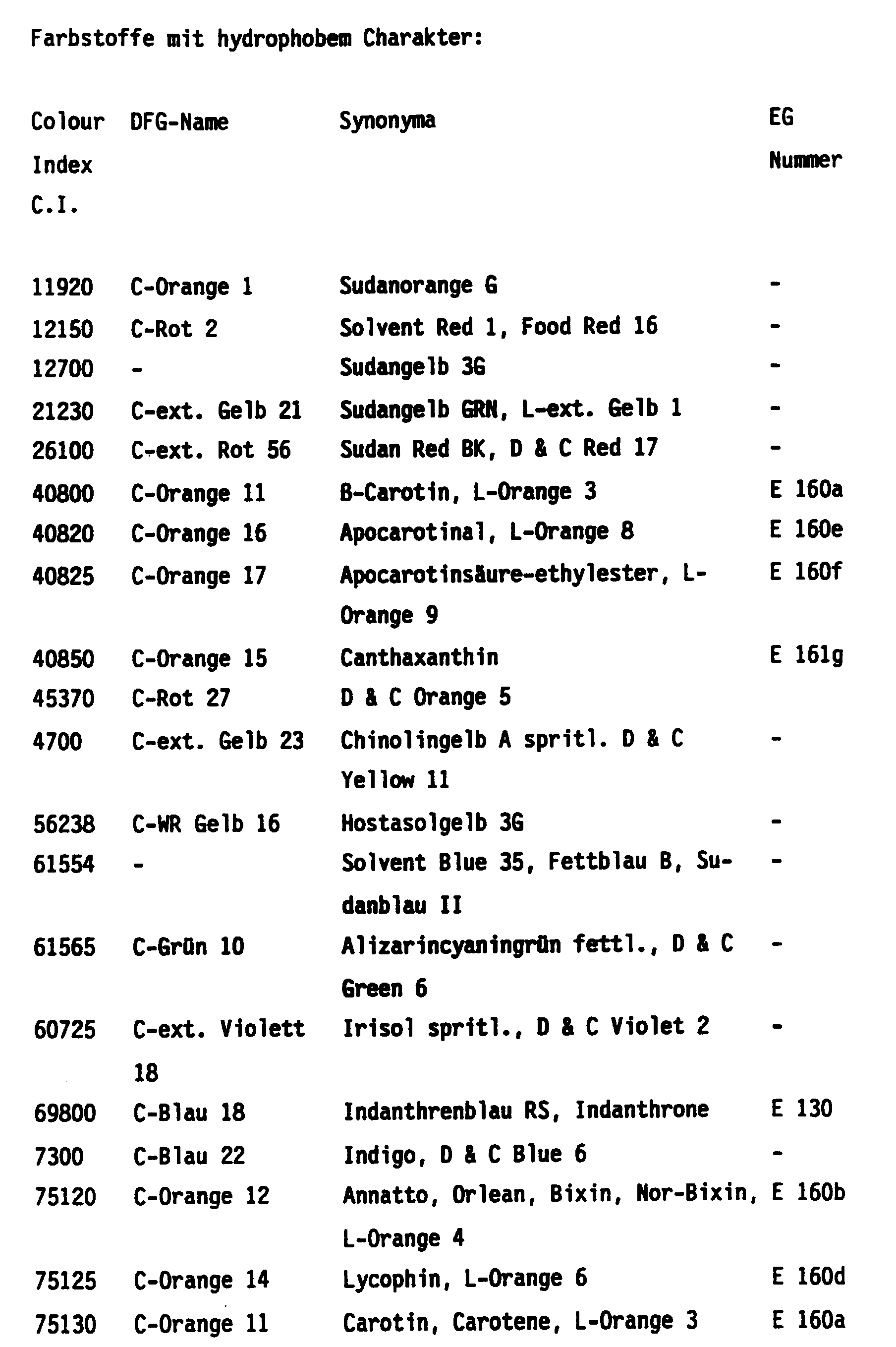

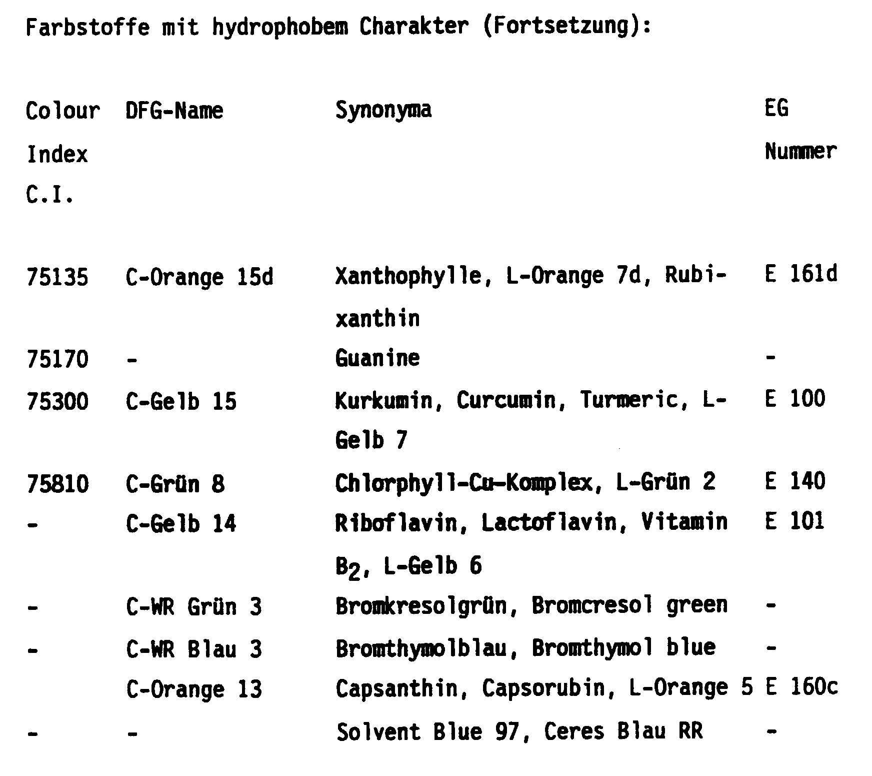

Gemäß einer bevorzugten Ausführungsform der vorliegenden Erfindung werden als Farbstoffe mit hydrophilem Charakter Erythrosin (C.I. 45 430; E 127) und Ponceau 4 R (C.I. 16255; E 124) eingesetzt. Als Farbstoffe mit hydrophobem Charakter werden erfindungsgemäß bevorzugt Curcumin (C.I. 75300; E 100), β-Carotin (C.I. 40800; E 160a), Riboflavin (E 101) und Ceres Blau RR eingesetzt.

Gemäß einer weiteren bevorzugten Ausführungsform der vorliegenden Erfindung werden Farbstoffkombinationen aus zwei verschiedenen Farbstoffen (binäres System), von denen einer einen hydrophilen und der andere einen hydrophoben Charakter aufweist, eingesetzt. In diesem Sinne ist es erfindungsgemäß bevorzugt, daß eine Komponente der binären Farbstoffkombination Erythrosin und die zweite Komponente Curcumin oder β-Carotin ist.

Darüber hinaus umfaßt die vorliegende Erfindung Farbstoffkombinationen aus drei verschiedenen Farbstoffen (ternäres System), von denen mindestens einer einen hydrophilen Charakter und mindestens ein weiterer einen hydrophoben Charakter aufweist. Für derartige Systeme ist es im Prinzip ohne Bedeutung, ob der dritte zusätzliche Farbstoff einen hydrophilen oder einen hydrophoben Charakter aufweist. Im Sinne der Erfindung werden jedoch für derartige ternäre Systeme die vorstehend für binäre Farbstoffkombinationen angeführten Farbstoffe und als zusätzliche Farbstoffkomponente Ceres Blau RR eingesetzt.

Analog zu den vorstehenden Ausführungen umfaßt die vorliegende Erfindung auch Farbstoffkombinationen aus vier verschiedenen Farbstoffen (quartäres System) oder aus mehr verschiedenen Farbstoffen.

Gemäß einer weiteren bevorzugten Ausführungsform der Erfindung ist die Farbstoffkombination aus wenigstens zwei Farbstoffen in der Lösung in einem Anteil von 0,05 bis 3 Gew.-%, vorzugsweise 0,05 bis 2 Gew.-% und besonders bevorzugt 0,05 bis 1 Gew.-%, enthalten.

Das Verhältnis der Farbstoffe in binären Systemen beträgt 1:10 bis 10:1, vorzugsweise 1:5 bis 5:1 und besonders bevorzugt 1:2 bis 2:1. In der Regel führen jedoch 1:1 Gemische zu guten Ergebnissen.

Für die ternären bzw. quartären Systeme gilt, daß ein Farbstoff nicht in mehr als 10-fachem, vorzugsweise 5-fachem Überschuß, bezogen auf den Farbstoff mit dem geringsten Anteil, vorliegt. Für Kombinationen von mehr als vier verschiedenen Farbstoffen gilt entsprechendes. In der Regel sind jedoch allgemein Kombinationen, in denen die Farbstoffe in gleichen Anteilen vorliegen, bevorzugt.

Die Erfindung betrifft ferner flüssige Formulierungen enthaltend, neben einem geeigneten Lösungsmittel, eine Kombination von wenigstens zwei Farbstoffen, von denen wenigstens einer einen hydrophilen Charakter und wenigstens einer einen hydrophoben Charakter aufweist. Eine derartige Farbstoffkombination ermöglicht es, organische Lebensmittelrückstände auf harten Oberflächen nach ihrer Art optisch zu unterscheiden.

Besonders gute Ergebnisse hinsichtlich der Differenzierung der Art der Verschmutzung durch deren spezifischen Einfärbung werden erfindungsgemäß insbesondere dadurch erzielt, daß eine Komponente der Farbstoffkombination Erythrosin und die zweite Komponente Curcumin oder β-Carotin ist. Für ternäre Farbstoffsysteme ist es erfindungsgemäß bevorzugt, die vorstehend angeführten Farstoffe sowie als zusätzliche Komponente der Farbstoffkombination Ceres Blau RR einzusetzen.

Als geeignetes Lösungsmittel für die flüssige Formulierung der Farbstoffkombination kann Wasser mit einem pH-Wert von ≥ 8 eingesetzt werden. Der für die Löslichkeit der Farbstoffkombination geeignete pH-Wert, der jeweils individuell bestimmt werden muß, wird mit Hilfe geeigneter Basen, insbesondere Alkalimetallhydroxiden (NaOH, KOH) oder Alkalimetallcarbonaten (Natriumcarbonat, Kaliumcarbonat), eingestellt. Ein auf diese Weise auf pH-Werte im alkalischen Bereich eingestelltes Wasser vermag auch die vorstehend genannten Farbstoffe mit hydrophobem Charakter zu lösen.

Als weiteres geeignetes Lösungsmittel für die Farbstoffkombination eignet sich jedoch insbesondere ein Gemisch aus Wasser und einem mit Wasser mischbaren organischen Lösungsmittel als Lösungsvermittler. Das mit Wasser mischbare organische Lösungsmittel wird dabei vorzugsweise in einem Gewichtsverhältnis von Wasser zu wassermischbarem organischen Lösungsmittel im Bereich von 20 : 1 bis 1 : 20, vorzugsweise 10 : 1 bis 1 : 10 und insbesondere 2 : 1 bis 1 : 2, eingesetzt. In diesem Fall kann auf den Zusatz von Basen zur Lösung verzichtet werden.

Als mit Wasser mischbare organische Lösungsmittel eignen sich insbesondere ein- und zweiwertige mit Wasser mischbare Alkohole, insbesondere Ethanol, Propanol, Isopropanol, Butanol, Ethylenglykol, Propylenglykol, Butylglykol, Methyldiglykol, Ethylendiglykol, Butyldiglykol oder Dipropylenglykolmonoethylether. Diese mit Wasser mischbaren organischen Lösungsmittel haben dabei die Funktion eines Lösungsvermittlers. In diesem Zusammenhang ist als Lösungsvermittler ferner das 1:1 Gemisch aus Triethanolamin und Caprylsäure oder Natrium-cumolsulfonat, gegebenenfalls als ihre wäßrigen Lösungen, zu nennen.

Die Farbstoffkombination kann auch in einem geeignetem reinen organischen Lösungsmittel gelöst werden. Zu nennen sind hierbei insbesondere die oben genannten, als Lösungsvermittler angeführten, mit Wasser mischbaren organischen Lösungsmittel oder deren Gemische. Ferner kann als Lösungsmittel für die Farbstoffkombination auch ein 1:1-Gemisch aus Triethanolamin und Caprylsäure oder Natrium-cumolsulfonat, jeweils gegebenenfalls als wäßrige Lösung, dienen.

Die Lösung der Farbstoffkombination kann ferner die üblichen, sonst in Reinigerzusammensetzungen enthaltenen nichtionischen, kationischen, anionischen oder amphoteren Tenside oder Gemische daraus enthalten, um gegebenenfalls vorhandene Fett- oder Eiweißschichten für die Farbstoffkombination durchlässig zu machen, um darunterliegende Kohlenhydrate zu erreichen und einfärben zu können. Derartigen Formulierungen können Tenside in einem Anteil von 0,05 bis 2 Gew.-%, vorzugsweise 0,05 bis 0,5 Gew.-% und besonders bevorzugt 0,05 bis 0,15 Gew.-% zugesetzt werden.

Als anionische Tenside werden beispielsweise solche vom Typ der Sulfonate und Sulfate eingesetzt, insbesondere Alken- und Hydroxyalkansulfonate oder Gemische daraus, Alkansulfonate, Estersulfonate, sulfierte Fettsäureglycerinester/Sulfotriglyceride, Alkylsulfate oder Alkoholsulfate oder Alk(en)ylsulfate/Ethersulfate, Alkylsulfobernsteinsäure, Sulfosuccinate Isethionate, Taurate, Phosphatester oder Mischungen davon.

Als nichtionische Tenside werden vorzugsweise ethoxylierte und/oder propoxylierte Alkohole eingesetzt, die sich von primären Alkoholen mit vorzugsweise 9-18 Kohlenstoffatomen und durchschnittlich 1-12 Mol Ethylenoxid und/oder Propylenoxid ableiten. Ferner können Alkylglukoside eingesetzt werden.

Als kationische Tenside kommen insbesondere quaternäre Ammoniumverbindungen (QAV), quaternäre Phosphoniumverbindungen (QPV) und Aminoxide in Frage. Der Erwähnung zu diesem Zwecke bedürfen ferner amphotere Verbindungen, insbesondere Betaine.

Neben den Farbstoffen, Tensiden oder Lösungsvermittlern können in der Lösung noch übliche Konservierungsmittel enthalten sein.

Nach der Behandlung der zu untersuchenden Oberfläche mit der die Farbstoffkombination enthaltenden Lösung kann bereits unmittelbar eine Differenzierung von Fett, Eiweiß und Kohlenhydrat (Stärke) durch deren unterschiedliche Färbung vorgenommen werden. Die unterschiedlichen Anfärbungen dieser Lebensmittelrückstände können durch Betrachtung mit bloßem Auge in der Regel bereits bei Tageslicht optisch bestimmt werden. Die Anfärbungen können jedoch gegebenenfalls durch Einwirkung von UV-Licht auf die behandelte Oberfläche zum Teil noch verstärkt oder erst sichtbar werden. Bei Vorliegen eines Gemisches aus Fett, Eiweiß und Kohlenhydraten können Mischfärbungen auftreten, wobei je nach dem Mengenverhältnis der vorhandenen Lebensmittelrückstände die eine oder andere Farbe dominiert.

Die Lösungen sind lagerstabil und können über einen längeren Zeitraum gelagert werden, ohne ihre Eigenschaften zu verlieren.

Die nachfolgenden Beispiele beschreiben die vorliegende Erfindung, ohne sie jedoch darauf zu beschränken.

### Beispiele

1. In den nachfolgenden Formulierungen (Prozentangaben = Gew.-%) wurde jeweils voll entsalztes Wasser, Butyldiglykol als Lösungsvermittler, ein C₈-C₁₀-Fettalkohol-1,6-glucosid (Triton BG 10, Handelsprodukt der Firma Union Carbide) sowie der jeweilige Farbstoff bzw. Farbstoffkombination eingesetzt. Die Farbstoffkombination wurde sodann auf die zu untersuchende Oberfläche (weiße Keramik-Fliese) aufgesprüht und die Verfärbung durch entsprechende spezifische Einfärbung der vorher aufgetragenen Verschmutzungen in sichtbaren und UV-Licht (366 nm) untersucht.

Als Fett wurde Rindertalg, als Stärke wurde Mehl (10 gew.-%ig in Wasser) und als Eiweiß wurde eine Mischung von Vollmilch mit Eiweiß oder Casein verwendet.

| Formulierungen | 1 | 2 | 3 | 4 |
|---|---|---|---|---|
| Wasser | 47,30% | 47,20% | 47,10% | 47,10 % |
| Lösungsvermittler | 52,50% | 52,50% | 52,50% | 52,50 % |
| Tensid | 0,10% | 0,10% | 0,10% | 0,10% |
| Curcumin | 0,10% | -- | 0,10% | 0,15 % |
| Erythrosin | -- | 0,20% | 0,20% | 0,15 % |

### Anmerkung: Formulierungen 1 und 2 sind Vergleichsbeispiele Versuche

A) Farben unter Tageslicht

| Formulierungen | 1 | 2 | 3 | 4 |
|---|---|---|---|---|
| Fett | rot | gelb | gelb | leicht gelb |
| Protein | rot | gelb | orange | rot |
| Stärke | rot | gelb | rot | rosa |

B) Farben unter UV-Licht (366 nm)

| Formulierungen | 1 | 2 | 3 | 4 |
|---|---|---|---|---|
| Fett | -- | grün/gelb | grün/gelb | grün/gelb |
| Protein | orange | grün/gelb | rot/orange | orange |
| Stärke | -- | grün/gelb | orange | hell orange |

Ein gleiches Ergebnis wird für die Farbstoffkombination Erythrosin und Curcurmin (2:1) erhalten, wenn man anstelle des Wasser/Lösungsvermittlergemisches ein einziges Lösungsmittel (Butyldiglykol, Butylglykol, Methyldiglykol, Ethylenglykol, Dipropylenglykolmonoethylether, Ethanol, 40 gew.-%ige wäßrige Na-Cumolsulfat-Lösung oder 66 gew.-%ige wäßrige Triethanolamin/Caprylsäure (1:1)-Lösung) einsetzt.
Im Gemisch mit Wasser kann Butyldiglykol durch Butylglykol, Ethylenglykol, Methyldiglykol, Ethanol oder ein wäßriges 1:1-Gemisch aus Triethanolamin:Caprylsäure (67 gew.-%ig) ersetzt werden, ohne Einfluß auf das Ergebnis zu nehmen.

2. Für nachfolgende Formulierungen wurden jeweils 47,1 Gew.-% voll entsalztes Wasser, 52,5 Gew.-% Butyldiglykol als Lösungsvermittler, 0,1 Gew.-4 Triton BG 10 als Tensid und insgesamt 0,3 Gew.-% der jeweiligen Farbstoffkombination eingesetzt.
Die Formulierungen wurden dann auf die zu untersuchende Oberfläche (weiße Keramik-Fliese) aufgesprüht und die Verfärbung der zuvor aufgetragenen Anschmutzungen (wie vorstehend beschrieben) unter sichtbarem Licht und UV-Licht (366 nm) bestimmt.

Die Ergebnisse sind in der nachfolgenden Tabelle 1 dargestellt.

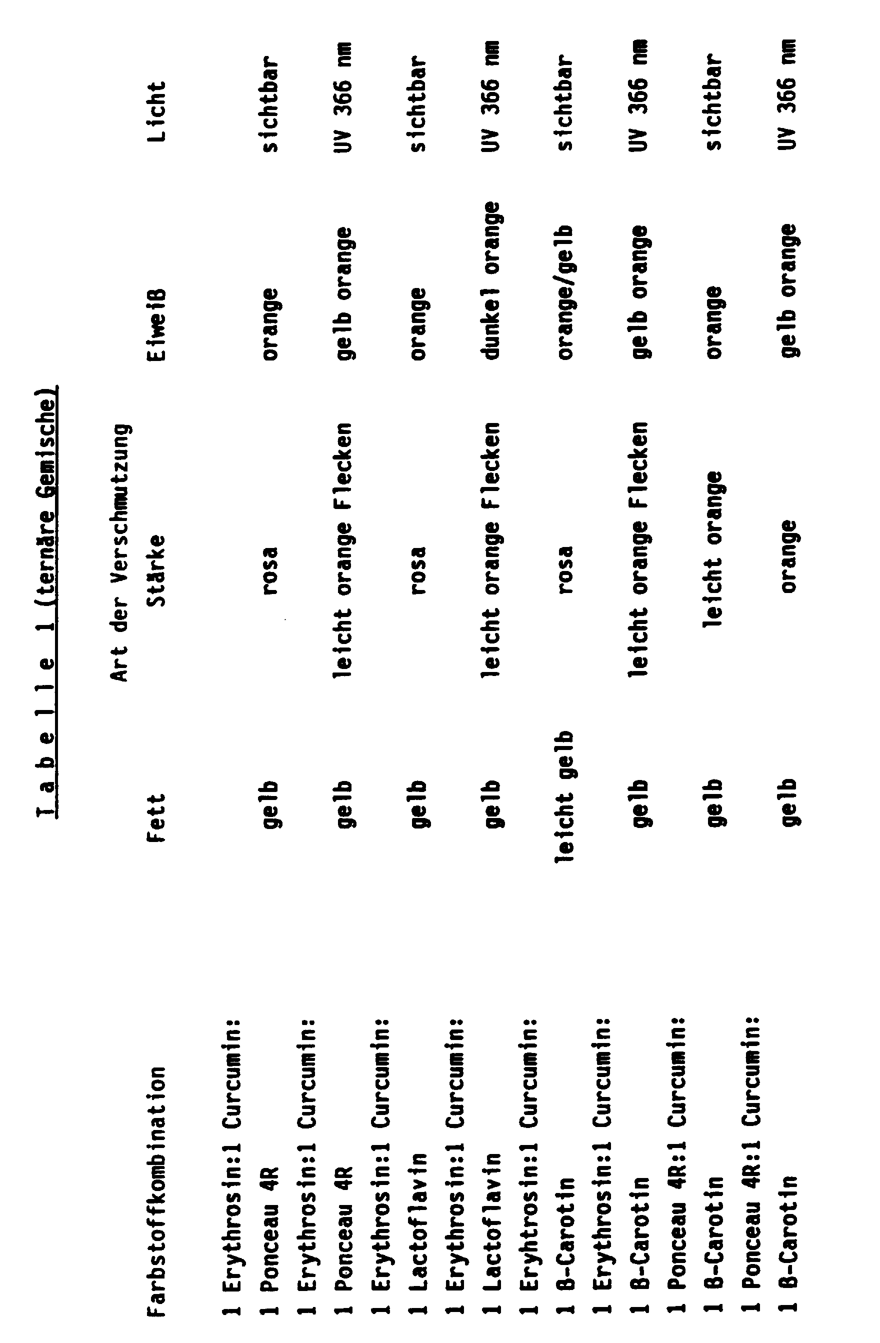

3. Weitere Versuche wurden mit den folgenden Formulierungen (binäre und ternäre Farbstoffkombinationen) durchgeführt:

| | binäre Farbstoffkomb. (1 : 1) | ternäre Farbstoffkomb. (1 : 1 : 1) |
|---|---|---|
| Farbstoffkombination | 0,4 Gew.-% | 0,6 Gew.-% |
| Tensid (Triton BG 10) | 0,1 Gew.-% | 0,1 Gew.-% |
| Lösungsvermittler (Methyldiglykol) | 5,0 Gew.-% | 5,0 Gew.-% |
| Wasser (voll entsalzt) | 94,5 Gew.-% | 94,3 Gew.-% |

Die Formulierungen wurden auf die zu untersuchende Oberfläche (weiße Keramik-Fliese), auf die zuvor die vorstehend beschriebenen Anschmutzungen - jeweils einzeln sowie als ternäre Mischung - aufgetragen worden waren, aufgesprüht und die Anfärbungen unter sichtbarem Licht (Tageslicht) betrachtet und bestimmt.

Die Ergebnisse sind in der nachfolgenden Tabelle 2 wiedergegeben.

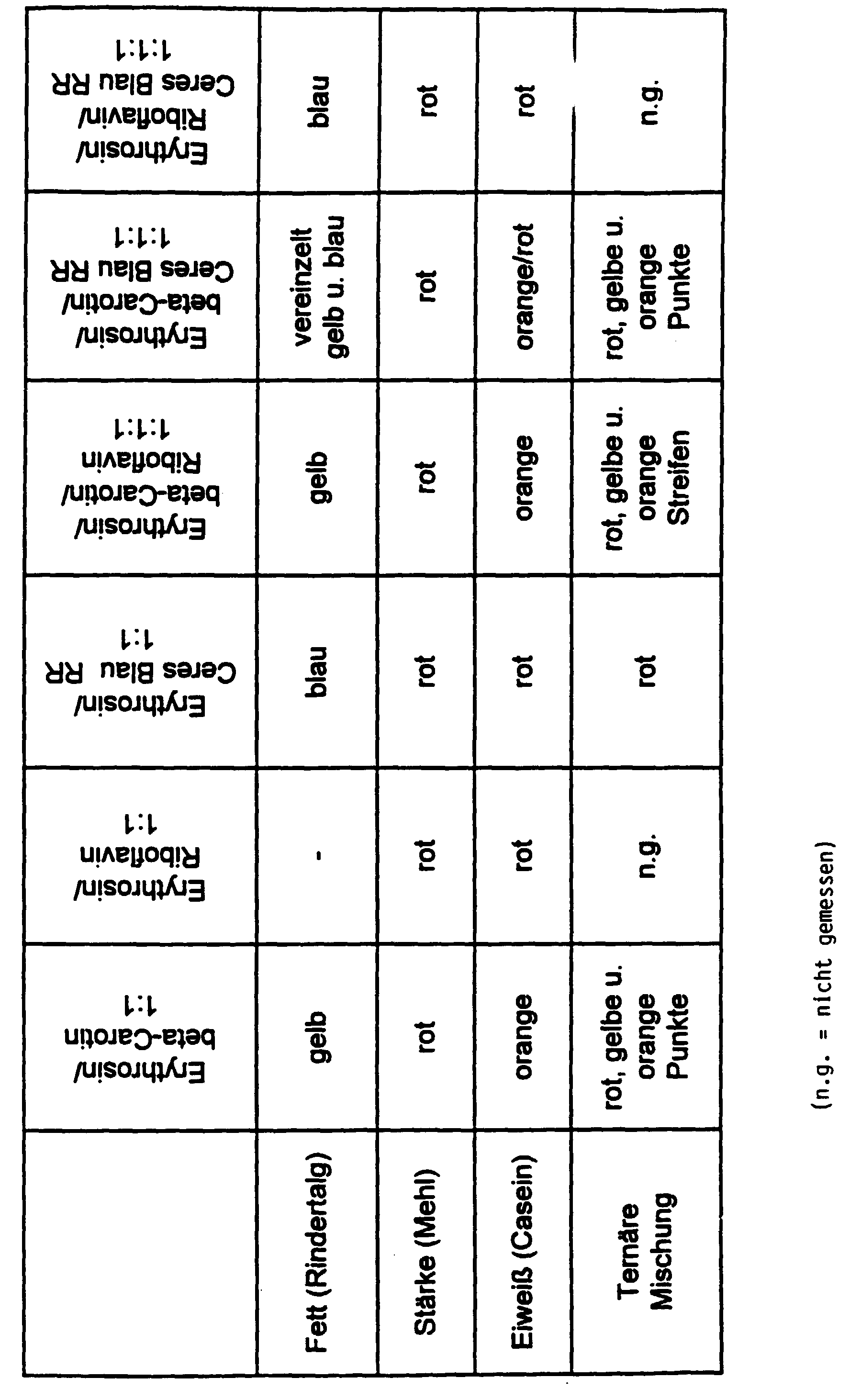

## Patentansprüche

1. Verfahren zur Differenzierung von organischen Lebensmittelrückständen nach ihrer Art auf harten Oberflächen durch Aufbringen einer Lösung enthaltend eine Kombination von wenigstens zwei Farbstoffen, von denen wenigstens einer einen hydrophilen Charakter und wenigstens einer einen hydrophoben Charakter aufweist, auf die harte Oberfläche und anschließende optische Bestimmung der Art der Rückstände durch ihre spezifische Einfärbung.

2. Verfahren nach Anspruch 1, dadurch gekennzeichnet, daß es sich bei der Art der organischen Rückstände um Fette, Eiweiße und/oder Kohlenhydrate handelt.

3. Verfahren nach Anspruch 1 oder 2, dadurch gekennzeichnet, daß die Farbstoffe mit hydrophilem Charakter ausgewählt sind aus Erythrosin und Ponceau 4 R und die Farbstoffe mit hydrophobem Charakter ausgewählt sind aus Curcumin, β-Carotin, Riboflavin und Ceres Blau RR.

4. Verfahren nach einem oder mehreren der Ansprüche 1 bis 3, dadurch gekennzeichnet, daß eine Komponente der Farbstoffkombination Erythrosin und die zweite Komponente Curcumin oder β-Carotin ist.

5. Verfahren nach Anspruch 4, dadurch gekennzeichnet, daß eine zusätzliche Komponente der Farbstoffkombination Ceres Blau RR ist.

6. Verfahren nach einem oder mehreren der Ansprüche 1 bis 5, dadurch gekennzeichnet, daß die Kombination der wenigstens zwei Farbstoffe in der Lösung in einem Anteil von 0,05 bis 3 Gew.-% enthalten ist.

7. Verfahren nach einem oder mehreren der Ansprüche 1 bis 6, dadurch gekennzeichnet, daß als Lösungsmittel für die Kombination aus wenigstens zwei Farbstoffen Wasser mit einem pH-Wert von ≥ 8 eingesetzt wird.

8. Verfahren nach einem oder mehreren der Ansprüche 1 bis 6, dadurch gekennzeichnet, daß als Lösungsmittel für die Kombination aus wenigstens zwei Farbstoffen ein Gemisch aus Wasser und einem wassermischbaren, organischen Lösungsmittel eingesetzt wird.

9. Verfahren nach Anspruch 8, dadurch gekennzeichnet, daß das Gewichtsverhältnis von Wasser zu wassermischbarem organischem Lösungsmittel im Bereich von 20 : 1 bis 1 : 20, vorzugsweise im Bereich von 10 : 1 bis 1 : 10 und insbesondere von 2 : 1 bis 1 : 2, liegt.

10. Verfahren nach einem oder mehreren der Ansprüche 1 bis 6, dadurch gekennzeichnet, daß als Lösungsmittel für die Kombination aus wenigstens zwei Farbstoffen ein wassermischbares, organisches Lösungsmittel eingesetzt wird.

11. Verfahren nach einem oder mehreren der Ansprüche 1 bis 10, dadurch gekennzeichnet, daß die Lösung zusätzlich wenigstens ein nichtionisches, anionisches, kationisches oder amphoteres Tensid enthält.

12. Verfahren nach Anspruch 11, dadurch gekennzeichnet, daß das Tensid in der Lösung in einem Anteil von 0,05 bis 2 Gew.-% enthalten ist.

13. Flüssige Formulierung enthaltend, neben einem geeigneten Lösungsmittel, eine Kombination von wenigstens zwei Farbstoffen, von denen wenigstens einer einen hydrophilen Charakter und wenigstens einer einen hydrophoben Charakter aufweist.

14. Flüssige Formulierung nach Anspruch 13, dadurch gekennzeichnet, daß eine Komponente der Farbstoffkombination Erythrosin und die zweite Komponente Curcumin oder β-Carotin ist.

15. Flüssige Formulierung nach Anspruch 14, dadurch gekennzeichnet, daß eine zusätzliche Komponente der Farbstoffkombination Ceres Blau RR ist.

16. Flüssige Formulierung nach einem oder mehreren der Ansprüche 13 bis 15, dadurch gekennzeichnet, daß als Lösungsmittel Wasser mit einem pH-Wert von ≥ 8, ein wassermischbares, organisches Lösungsmittel oder ein Gemisch aus Wasser mit einen wassermischbaren, organischen Lösungsmittel eingesetzt wird.

17. Flüssige Formulierung nach einem oder mehreren der Ansprüche 13 bis 16, dadurch gekennzeichnet, daß der Anteil der Farbstoffkombination 0,05 bis 3 Gew.-% beträgt.

18. Flüssige Formulierung nach einem oder mehreren der Ansprüche 13 bis 17, dadurch gekennzeichnet, daß sie zusätzlich 0,05 bis 2 Gew-% eines Tensids enthält.

19. Verwendung der flüssigen Formulierung nach einem oder mehreren der Ansprüche 13 bis 18 zur Differenzierung von organischen Lebensmittelrückständen nach ihrer Art auf harten Oberflächen.

## Claims

1. A process for differentiating organic food residues according to type on hard surfaces by application of a solution containing a combination of at least two dyes, of which at least one is hydrophilic in character and at least one is hydrophobic in character, to the hard surface and subsequent visual determination of the nature of the residues through their specific coloration.

2. A process as claimed in claim 1, characterized in that the organic residues are fats, proteins and/or carbohydrates.

3. A process as claimed in claim 1 or 2, characterized in that the dyes of hydrophilic character are selected from erythrosine and Ponceau 4 R while the dyes of hydrophobic character are selected from curcumin, β-carotene, riboflavin and Ceres Blau RR.

4. A process as claimed in one or more of claims 1 to 3, characterized in that one component of the dye combination is erythrosine and the second component is curcumin or β-carotene.

5. A process as claimed in claim 4, characterized in that an additional component of the dye combination is Ceres Blau RR.

6. A process as claimed in one or more of claims 1 to 5, characterized in that the combination of at least two dyes is present in the solution in a quantity of 0.05 to 3% by weight.

7. A process as claimed in one or more of claims 1 to 6, characterized in that water with a pH value of ≥ 8 is used as the solvent for the combination of at least two dyes.

8. A process as claimed in one or more of claims 1 to 6, characterized in that a mixture of water and a water-miscible organic solvent is used as solvent for the combination of at least two dyes.

9. A process as claimed in claim 8, characterized in that the ratio by weight of water to water-miscible organic solvent is in the range from 20:1 to 1:20, preferably in the range from 10:1 to 1:10 and more preferably in the range from 2:1 to 1:2.

10. A process as claimed in one or more of claims 1 to 6, characterized in that a water-miscible organic solvent is used as solvent for the combination of at least two dyes.

11. A process as claimed in one or more of claims 1 to 10, characterized in that the solution additionally contains at least one nonionic, anionic, cationic or amphoteric surfactant.

12. A process as claimed in claim 11, characterized in that the surfactant is present in the solution in a quantity of 0.05 to 2% by weight.

13. A liquid formulation containing - in addition to a suitable solvent - a combination of at least two dyes of which at least one is hydrophilic in character and at least one hydrophobic in character.

14. A liquid formulation as claimed in claim 13, characterized in that one component of the dye combination is erythrosine and the second component is curcumin or β-carotene.

15. A liquid formulation as claimed in claim 14, characterized in that an additional component of the dye combination is Ceres Blau RR.

16. A liquid formulation as claimed in one or more of claims 13 to 15, characterized in that water with a pH value of ≥ 8, a water-miscible organic solvent or a mixture of water with a water-miscible organic solvent is used as solvent.

17. A liquid formulation as claimed in one or more of claims 13 to 16, characterized in that the dye combination makes up 0.05 to 3% by weight of the formulation.

18. A liquid formulation as claimed in one or more of claims 13 to 17, characterized in that it additionally contains 0.05 to 2% by weight of a surfactant.

19. The use of the liquid formulation claimed in one or more of claims 13 to 18 for differentiating organic food residues according to type on hard surfaces.

## Revendications

1. Procédé de différenciation de restes de produits alimentaires selon leur nature sur des surfaces dures par dépôt d'une solution contenant une combinaison d'au moins deux colorants, dont au moins l'un a un caractère hydrophile et au moins l'un a un caractère hydrophobe, sur la surface dure et ensuite évaluation optique de la nature des restes par leur teinture spécifique.

2. Procédé selon la revendication 1,
caractérisé en ce qu'
il s'agit pour la nature des restes organiques de graisses, d'albumines et/ou d'hydrates de carbone.

3. Procédé selon la revendication 1 ou 2,
caractérisé en ce qu'
on choisit les colorants à caractère hydrophile parmi l'erythrosine et le ponceau 4R et les colorants à caractère hydrophobe parmi la curcumine, le B-carotène, la riboflavine et le bleu cérès RR.

4. Procédé selon l'une ou plusieurs des revendications 1 à 3,
caractérisé en ce qu'
un composant de la combinaison de colorants est l'érythrosine et le deuxième composant est la curcumine ou le B-carotène.

5. Procédé selon la revendication 4,
caractérisé en ce qu'
un composant supplémentaire de la combinaison de colorants est le bleu cérès RR.

6. Procédé selon l'une ou plusieurs des revendications 1 à 5,
caractérisé en ce que
la combinaison d'au moins deux colorants dans la solution est présente en une teneur de 0,05 à 3 % en poids.

7. Procédé selon l'une ou plusieurs des revendications 1 à 6,
caractérisé en ce qu'
on utilise comme solvant de la combinaison d'au moins deux colorants de l'eau à un pH de ≥ 8.

8. Procédé selon l'une ou plusieurs des revendications 1 à 6,
caractérisé en ce qu'
on utilise comme solvant de la combinaison d'au moins deux colorants un mélange d'eau et d'un solvant organique miscible à l'eau

9. Procédé selon la revendication 8,
caractérisé en ce que le rapport pondéral de l'eau au solvant organique miscible à l'eau est dans le domaine de 20:1 à 1:20, de préférence dans le domaine de 10:1 et notamment de 2:1 à 1:2.

10. Procédé selon l'une ou plusieurs des revendications 1 à 6,
caractérisé en ce qu'
on utilise comme solvant de la combinaison d'au moins deux colorants un solvant organique miscible à l'eau.

11. Procédé selon l'une ou plusieurs des revendications 1 à 10,
caractérisé en ce que
la solution contient en plus au moins un tensioactif non ionique, anionique, cationique ou amphotère.

12. Procédé selon la revendication 11,
caractérisé en ce que le tensioactif est présent dans la solution en une teneur de 0,05 à 2 % en poids.

13. Formulation liquide contenant, outre un solvant approprié, une combinaison d'au moins deux colorants dont au moins l'un a un caractère hydrophile et au moins l'un a un caractère hydrophobe.

14. Formulation liquide selon la revendication 13,
caractérisée en ce qu'
un composant de la combinaison de colorant est l'érythrosine et le deuxième composant est la curcumine ou le B-carotène.

15. Formulation liquide selon la revendication 14,
caractérisée en ce qu'
un comportant supplémentaire de la combinaison de colorants est le bleu cérès RR.

16. Formulation liquide selon l'une ou plusieurs des revendications 13 à 15,
caractérisée en ce qu'
on utilise comme solvant l'eau à un pH ≥ 8, un solvant organique, miscible à l'eau ou un mélange d'eau et d'un solvant organique miscible à l'eau.

17. Formulation liquide selon l'une ou plusieurs des revendications 13 à 16,
caractérisée en ce que
la teneur de la combinaison de colorants représente 0,05 à 3 % en poids.

18. Formulation liquide selon l'une ou plusieurs des revendications 13 à 17,
caractérisée en ce qu'
elle contient en plus 0,05 à 2 % en poids d'un tensioactif.

19. Utilisation de la formulation liquide selon l'une ou plusieurs des revendications 13 à 18 pour différencier des restes de produits alimentaires organiques selon leur nature sur des surfaces dures.
